# EUROPÄISCHE PATENTSCHRIFT

(11) **EP 1 609 679 B1**
(45) Veröffentlichungstag und Bekanntmachung des Hinweises auf die Patenterteilung: **26.12.2007**
(21) Anmeldenummer: 05012658.0
(22) Anmeldetag: 13.06.2005
(51) Int. Cl.: B60R 11/02

(54) **Fahrzeuglenkrad**
Vehicle steering wheel
Volant de véhicule

(30) Priorität: 17.06.2004 DE 202004009568 U
(43) Veröffentlichungstag der Anmeldung: 28.12.2005
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Kitzhofer, Thomas

(56) Entgegenhaltungen:
- DE-A1- 4 220 016
- DE-U1- 29 907 365
- PATENT ABSTRACTS OF JAPAN Bd. 008, Nr. 128 (M-302), 14. Juni 1984 (1984-06-14) & JP 59 032540 A (AISHIN SEIKI KK; others: 01), 22. Februar 1984 (1984-02-22)
- PATENT ABSTRACTS OF JAPAN Bd. 009, Nr. 010 (E-290), 17. Januar 1985 (1985-01-17) & JP 59 160328 A (AISHIN SEIKI KK; others: 01), 11. September 1984 (1984-09-11)
- PATENT ABSTRACTS OF JAPAN Bd. 018, Nr. 319 (M-1623), 17. Juni 1994 (1994-06-17) & JP 06 072421 A (SHINSEI IND:KK), 15. März 1994 (1994-03-15)

## Beschreibung

Die Erfindung betrifft ein Fahrzeuglenkrad, mit einem Lenkradkörper, der eine Nabe hat, einer an der Nabe befestigten, separaten Funktionseinheit, insbesondere einem Gassackmodul, und einem Mikrofon.

Bislang werden festeingebaute Mikrofone im Fahrzeug für das Autotelefon in das Innenleuchtenmodul integriert oder im Bereich der Instrumententafel vorgesehen. Die Sprechqualität ist dabei allerdings verbesserungsbedürftig aufgrund der Nähe zur Fahrzeugaußenhaut, aufgrund der Windgeräusche der Lüftung und aufgrund des großen Abstandes der Insassen zum Mikrofon.

Es gibt Überlegungen, das Mikrofon in das Lenkrad zu integrieren. Diese Ansätze sind aber bislang nicht verwirklicht worden, weil das Mikrofon einerseits möglichst nahe an der Oberfläche des Lenkrades sitzen sollte und andererseits noch eine ausreichende Aufnahmeempfindlichkeit gegeben sein muß, wenn der Fahrer an die Stelle des Lenkrades greift, an der das Mikrofon vorgesehen ist.

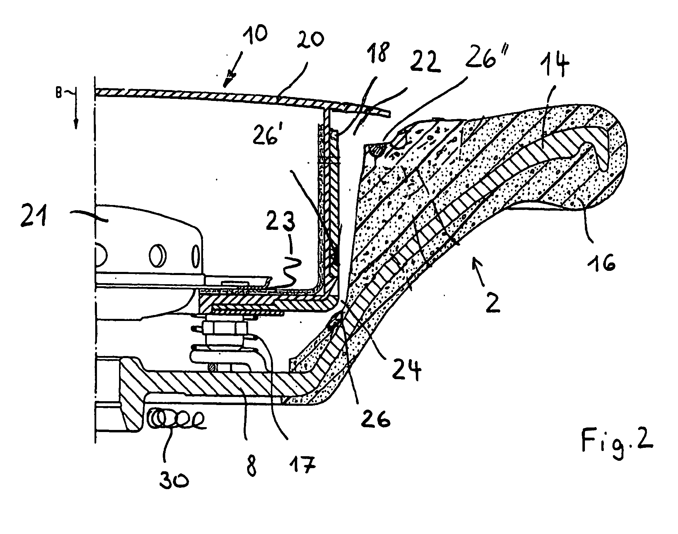

Das Gebrauchsmuster DE 29907365U1 offenbart ein solches Fahrzeuglenkrad, mit einem Lenkradkörper der eine Nabe hat, einer an der Nabe befestigten, separaten Funktionseinheit, insbesondere einem Gassackmodul, und einem Mikrofon, wobei der Lautsprecher, das Mikrofon, die wähltasten und die Ein-/Austaste segmentartig um den Innenkranz des Lenkrades angeordnet sind (Figur 2).

Die Erfindung schafft ein Fahrzeuglenkrad mit integriertem Mikrofon, welches sich durch eine gute und störarme Aufnahmequalität, weitgehend frei von Störgeräuschen auszeichnet. Dies wird bei einem Fahrzeuglenkrad der eingangs genannten Art dadurch erreicht, daß das Mikrofon in einem seitlichen Spalt zwischen dem Lenkradkörper und der Funktionseinheit angeordnet ist. Die Funktionseinheit, z.B. das Gassackmodul, ist ein separates Bauteil, welches am Lenkradkörper befestigt wird, wobei üblicherweise stets seitlich ein Spalt zwischen der Außenseite des Gassackmoduls und der angrenzenden Umschäumung des Lenkradskeletts vorhanden ist. Dieser Spalt wird nun erfindungsgemäß ausgenutzt, indem das Mikrofon in ihm angeordnet ist. Das Mikrofon ist dadurch vor Windbeeinflussung geschützt und kann vom Fahrer nicht berührt und damit nicht abgedeckt werden. Es ergibt sich auch eine bessere Mikrofonrichtcharakteristik für den Fahrer, denn dieser spricht direkt ins Mikrofon. Störgeräusche, insbesondere auf niedrigen Frequenzspektren, werden durch den Spalt und das den Spalt begrenzende Material nicht so stark übertragen wie bei einem Mikrofon in der Innenleuchte. Der Spalt ist ein reflexionsarmer Bauraum, der nun erstmals technisch vorteilhaft ausgenutzt wird. Wenn die Hand den Spalt verdeckt, kommt es zu einer Reduktion der Lautstärke und damit der Empfindlichkeit von etwa nur 3 dB, was durchaus akzeptabel ist.

Vorzugsweise ist das Mikrofon nahe des oder am Boden des Spalts angeordnet, es kann jedoch auch an den Seitenwänden der Funktionseinheit, genauer gesagt dessen Gehäuses, oder seitlich in der den Spalt begrenzenden Wand des Lenkradkörpers integriert sein.

Bevorzugt ist das Mikrofon in die Kunststoffaußenschicht der Funktionseinheit oder des Lenkradkörpers eingebettet. Hierbei ist es besonders vorteilhaft, wenn das Mikrofon in eine Umschäumung des Lenkradskeletts eingebettet ist, was ggf. sogar schon bei der Herstellung des Lenkradkörpers erfolgen kann. Das Mikrofon ist dadurch sicher und fest mit dem Lenkradkörper verbunden.

Der Spalt ist gemäß der bevorzugten Ausführungsform seitlich und zum Fahrer offen.

Es wird insbesondere derjenige Spalt verwendet, der zwischen der Außenseite des Gassackmoduls und den Speichen des Lenkradkörpers vorgesehen ist. Hier ist der Spalt in seiner Längserstreckung besonders kurz, so daß seitlich noch Schallwellen in ihn eintreten können, wenn die Hand des Fahrers den Spalt vorderseitig abdeckt.

Für das Mikrofon werden keine separaten Leitungen zur Übertragung der Signale vom Lenkrad zum Fahrzeug benötigt. Die Erfindung sieht vor, daß ein Modulator die Mikrofonsignale auf die bereits vorhandene Stromversorgung der Lenkradelektronik aufmoduliert. Das Signal läuft dann über die ebenfalls stets vorhandene Wickelfeder zur Elektronik des Mantelrohrmoduls, wo das Signal wieder abgegriffen, decodiert und in ein Line-In-kompatibles Audiosignal umgewandelt wird. Dieses Signal wird der Telefoneinheit zur Weiterverarbeitung zur Verfügung gestellt.

Sind genügend freie Wickelfederbahnen vorhanden, so können die Signale auch direkt an die Telefoneinheit übermittelt werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein erfindungsgemäßes Fahrzeuglenkrad,
- Figur 2 eine Schnittansicht längs der Linie II-II in Figur 1 im Bereich des Spaltes, und
- Figur 3 ein Blockschaltbild, das den Signalfluß zwischen Mikrofon und Telefoneinheit zeigt.

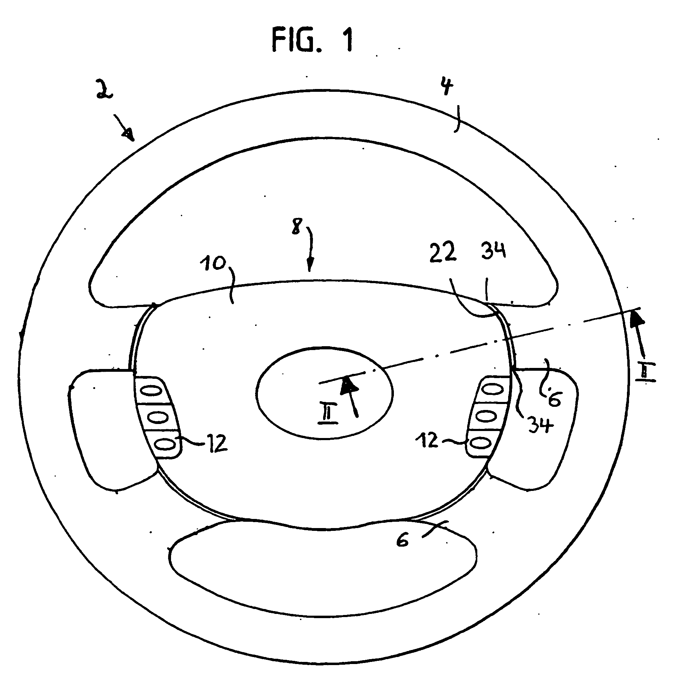

In Figur 1 ist ein Fahrzeuglenkrad gezeigt, mit einem Lenkradkörper 2, der einen Lenkradkranz 4, Speichen 6 und eine Nabe 8 aufweist. Auf der Nabe 8 ist eine separate, als vormontiertes Teil ausgeführte elektrische Funktionseinheit in Form eines Gassackmoduls 10 befestigt. Am Gassackmodul 10 sind wiederum Multifunktionsschalter 12 angebracht, die somit einen Teil der Funktionseinheit bilden.

In Figur 2 ist zu erkennen, daß der Lenkradkörper 2 ein Metallskelett 14 besitzt, welches bis auf den Nabenbereich 8 großflächig umschäumt ist. Die Umschäumung trägt das Bezugszeichen 16. Sie bildet den äußeren Abschluß des im eingebauten Zustand von außen sichtbaren Teils des Lenkradkörpers 2.

Das Gassackmodul 10 ist ein sogenanntes Floating-horn-Modul, welches über Federn 17 axial in Richtung des Pfeiles B verschieblich ist, um eine Hupe zu betätigen. Das Gassackmodul 10 besitzt ein Gehäuse mit einem topfförmigen Aufnahmekörper 18 und einer deckelförmigen Abdeckkappe 20, beide aus Kunststoff. Im Inneren des Gehäuses sind ein Gasgenerator 21 und ein Gassack 23 untergebracht.

Seitlich zwischen der Außenseite des Gehäuses, vorliegend des Aufnahmekörpers 18 und dem Lenkradkörper 2 ergibt sich im Bereich der Speichen 6 ein Spalt 22. Dieser Spalt 22 wird auf Seiten des Lenkradkörpers 2 durch die Umschäumung 16 begrenzt. Im Bereich des Bodens 24 des Spaltes 22 ist ein Mikrofon 26 in die Umschäumung 16 eingebettet, so daß nur noch seine Außenseite gegenüber der Umschäumung 16 freiliegt. Das Mikrofon 26 ist also nicht lösbar mit dem Lenkradkörper 2 verbunden. Alternativ kann das Mikrofon auch in der durch das Gehäuse des Gassackmoduls 10 gebildeten Seitenwand oder in die gegenüberliegende, durch die Umschäumung 16 gebildete Seitenwand integriert sein. Diese so angeordneten Mikrofone sind mit den Bezugszeichen 26' bzw. 26" bezeichnet.

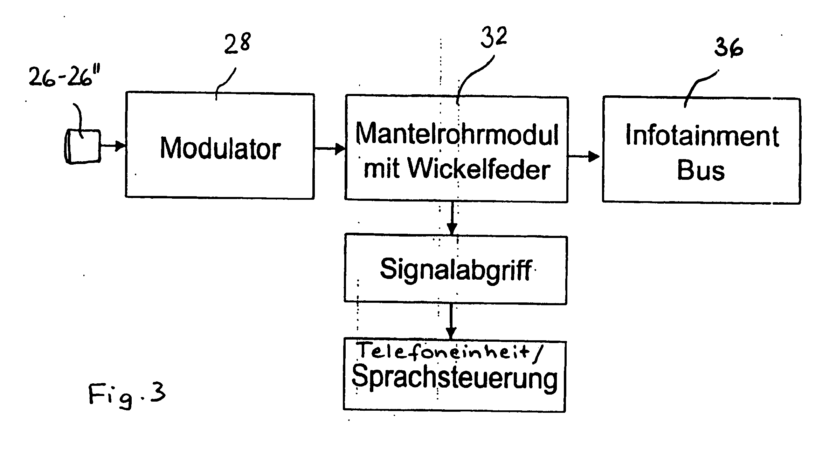

Von den Mikrofonen 26 bis 26" verlaufen Kabel zu einem im Lenkrad vorgesehenen Modulator 28 (siehe Figur 3), der das Mikrofonsignal auf die Stromaufnahme der Lenkradelektronik (für Multifunktionsschalter 12 und Gasgenerator 21) aufmoduliert. Das Signal läuft über die Wickelfeder 30 (siehe Figur 2), die ohnehin vorgesehen ist, zur Elektronik des Mantelrohrmoduls 32. Hier wird das Signal wieder abgegriffen (z.B. durch einen Shunt-Widerstand), verstärkt und in ein Line-In-kompatibles Audiosignal umgewandelt. Dieses Line-In-Signal wird der Telefoneinheit zur Weiterverarbeitung zur Verfügung gestellt. Wie zuvor bereits erwähnt, kann bei geeigneter Wickelfeder auch eine direkte Signalverbindung Mikrofon zu Telefoneinheit verwirklicht sein.

Der Spalt 22 ist zum Fahrer hin und den Seiten 34 hin offen, so daß auch dann das Mikrofon 26 bis 26", welches im übrigen von außen nicht sichtbar ist, die Schallwellen des Fahrers in ausreichendem Maß aufnimmt, wenn dieser den Spalt 22 vorderseitig abdeckt. Der Spalt 22 kann alternativ auch durch das Außengehäuse der Multifunktionsschalter 12 begrenzt sein, die bei dieser Ausführungsform dann zu den Speichen 6 nach oben gerückt wären. Alternativ könnte die elektrische Funktionseinheit auch durch eine andere elektronische Einheit gebildet sein, z.B. eine separate Multifunktionsschaltereinheit 12, die vom Gassackmodul 10 mechanisch entkoppelt ist.

Folgende Vorteile lassen sich durch das im Bereich des Spaltes 22 integrierte Mikrofon 26 bis 26" erlangen: Es werden für das Mikrofon 26 bis 26" keine zusätzlichen Leitungen in der Wickelfeder 30 benötigt. Durch die Stromschleifenübertragung ist die Signalübertragung störunempfindlich. Die Modularelektronik ist sehr einfach aufgebaut. Das Mikrofon 26 bis 26" liegt in einem reflexionsarmen Bauraum nach außen gut geschützt. Es ist sehr einfach in den bereits bestehenden Infotainment-Bus 36 für das Lenkrad integrierbar.

## Patentansprüche

1. Fahrzeuglenkrad, mit
einem Lenkradkörper (2), der eine Nabe (8) hat,
einer an der Nabe (8) befestigten, separaten Funktionseinheit, insbesondere einem Gassackmodul (10), und
einem Mikrofon (26 - 26"),
**dadurch gekennzeichnet,**
**daß** das Mikrofon (26 - 26") in einem seitlichen Spalt (22) zwischen dem Lenkradkörper (2) und der Funktionseinheit angeordnet ist..

2. Fahrzeuglenkrad nach Anspruch 1, **dadurch gekennzeichnet, daß** das Mikrofon (26 - 26") nahe des oder am Boden (24) des Spalts (22) angeordnet ist.

3. Fahrzeuglenkrad nach Anspruch 1 oder 2, **dadurch gekennzeichnet, daß** das Mikrofon (26 - 26") in die Funktionseinheit oder den Lenkradkörper (2) integriert ist.

4. Fahrzeuglenkrad nach einem der vorhergehenden Ansprüche, **dadurch gekennzeichnet, daß** das Mikrofon (26 - 26") in eine Kunststoffaußenschicht der Funktionseinheit oder des Lenkradkörpers (2) eingebettet ist.

5. Fahrzeuglenkrad nach einem der vorhergehenden Ansprüche, **dadurch gekennzeichnet, daß** das Mikrofon (26 - 26") in eine Umschäumung (16) eines Lenkradskeletts (14) eingebettet ist.

6. Fahrzeuglenkrad nach einem der vorhergehenden Ansprüche, **dadurch gekennzeichnet, daß** der Spalt (22) teilweise seitlich und zum Fahrer hin offen ist.

7. Fahrzeuglenkrad nach einem der vorhergehenden Ansprüche, **dadurch gekennzeichnet, daß** der Spalt (22) zwischen der Außenseite des Gassackmoduls (10) und Speichen (6) des Lenkradkörpers (2) vorgesehen ist.

8. Fahrzeuglenkrad nach einem der vorhergehenden Ansprüche, **dadurch gekennzeichnet, daß** für das Mikrofon (26 - 26") keine separate Leitung aus dem Lenkrad heraus zu einer Telefoneinheit vorgesehen ist.

9. Fahrzeuglenkrad nach einem der vorhergehenden Ansprüche, **gekennzeichnet durch** einen Modulator (28), der das Mikrofonsignal auf die Stromaufnahme der Lenkradelektronik aufmoduliert.

## Claims

1. A vehicle steering wheel comprising
a steering wheel body (2) having a hub (8),
a separate functional unit fastened to the hub (8), in particular a gas bag module (10), and
a microphone (26 - 26"),
**characterized in that**
the microphone (26 - 26") is arranged in a lateral gap (22) between the steering wheel body (2) and the functional unit.

2. The vehicle steering wheel according to claim 1, **characterized in that** the microphone (26 - 26") is arranged close to or on the base (24) of the gap (22).

3. The vehicle steering wheel according to claim 1 or 2, **characterized in that** the microphone (26 - 26") is integrated in the functional unit or the steering wheel body (2).

4. The vehicle steering wheel according to any of the preceding claims, **characterized in that** the microphone (26 - 26") is embedded in a plastic outer layer of the functional unit or of the steering wheel body (2).

5. The vehicle steering wheel according to any of the preceding claims, **characterized in that** the microphone (26 - 26") is embedded in a foam casing (16) of a steering wheel skeleton (14).

6. The vehicle steering wheel according to any of the preceding claims, **characterized in that** the gap (22) is open partially laterally and towards the driver.

7. The vehicle steering wheel according to any of the preceding claims, **characterized in that** the gap (22) is provided between the outer side of the gas bag module (10) and spokes (6) of the steering wheel body (2).

8. The vehicle steering wheel according to any of the preceding claims, **characterized in that** no separate wire is provided out of the steering wheel to a telephone unit for the microphone (26 - 26").

9. The vehicle steering wheel according to any of the preceding claims, **characterized by** a modulator (28) which modulates the microphone signal onto the current consumption of the steering wheel electronics.

## Revendications

1. Volant de direction de véhicule, comportant
un corps (2) de volant de direction présentant un moyeu (8),
un ensemble fonctionnel séparé et fixé au moyeu (8), en particulier un module (10) de coussin à gaz, et
un microphone (26-26"),
**caractérisé en ce que**
le microphone (26-26") est agencé dans une fente latérale (22) entre le corps (2) de volant de direction et l'ensemble fonctionnel.

2. Volant de direction de véhicule selon la revendication 1, **caractérisé en ce que** le microphone (26-26") est agencé à proximité du fond (24) de la fente (22) ou sur celui-ci.

3. Volant de direction de véhicule selon la revendication 1 ou 2, **caractérisé en ce que** le microphone (26-26") est intégré dans l'ensemble fonctionnel ou dans le corps (2) de volant de direction.

4. Volant de direction de véhicule selon l'une des revendications précédentes, **caractérisé en ce que** le microphone (26-26") est noyé dans une couche extérieure en matière plastique de l'ensemble fonctionnel ou du corps (2) de volant de direction.

5. Volant de direction de véhicule selon l'une des revendications précédentes, **caractérisé en ce que** le microphone (26-26") est noyé dans un enrobage par moussage (16) d'un squelette (14) de volant de direction.

6. Volant de direction de véhicule selon l'une des revendications précédentes, **caractérisé en ce que** la fente (22) est ouverte en partie sur le côté et en direction du conducteur.

7. Volant de direction de véhicule selon l'une des revendications précédentes, **caractérisé en ce que** la fente (22) est prévue entre la face extérieure du module (10) de coussin à gaz et des rayons (6) du corps (2) de volant de direction.

8. Volant de direction de véhicule selon l'une des revendications précédentes, **caractérisé en ce qu'**il n'est prévu, pour le microphone (26-26"), aucune conduite séparée hors du volant de direction vers une unité téléphonique.

9. Volant de direction de véhicule selon l'une des revendications précédentes, **caractérisé par** un modulateur (28) qui module le signal de microphone sur le courant absorbé par l'électronique du volant de direction.
